(19) Europäisches Patentamt
European Patent Office
Office européen des brevets

(11) **EP 4 549 608 A1**

(12) **EUROPEAN PATENT APPLICATION**
published in accordance with Art. 153(4) EPC

(43) Date of publication:
**07.05.2025  Bulletin 2025/19**

(21) Application number: **23830478.6**

(22) Date of filing: **30.06.2023**

(51) International Patent Classification (IPC):
*C22C 38/02* (2006.01)     *C22C 38/04* (2006.01)
*C22C 38/06* (2006.01)     *C22C 38/12* (2006.01)
*C22C 38/14* (2006.01)     *C22C 38/38* (2006.01)
*C22C 38/22* (2006.01)     *C22C 38/26* (2006.01)
*C22C 38/28* (2006.01)     *C22C 38/32* (2006.01)
*C22C 38/34* (2006.01)     *C22C 33/04* (2006.01)
*C21D 1/00* (2006.01)     *C23C 2/06* (2006.01)

(52) Cooperative Patent Classification (CPC):
Y02P 10/20

(86) International application number:
**PCT/CN2023/104382**

(87) International publication number:
**WO 2024/002314 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.06.2022  CN 202210759562**

(71) Applicant: BAOSHAN IRON & STEEL CO., LTD.
Shanghai 201900 (CN)

(72) Inventors:
• CHEN, Meng
  Shanghai 201900 (CN)
• BI, Wenzhen
  Shanghai 201900 (CN)
• ZHONG, Yong
  Shanghai 201900 (CN)
• WANG, Li
  Shanghai 201900 (CN)

(74) Representative: **Kuhnen & Wacker
Patent- und Rechtsanwaltsbüro PartG mbB
Prinz-Ludwig-Straße 40A
85354 Freising (DE)**

(54) **120-KG-GRADE ULTRAHIGH-STRENGTH GALVANIZED STEEL SHEET AND MANUFACTURING METHOD THEREFOR**

(57)     Provided in the present invention is a 120-kg-grade ultrahigh-strength galvanized steel sheet with a good resistance spot welding performance. The galvanized steel sheet comprises: 0.18-0.24% of C, 2.3-3.0% of Mn, 0.5-1.7% of Si, 0.02-1.0% of Al, 0.55<Si+AL≤1.75%, C+Si/30+Mn/20≤0.395%, and at least one selected from Nb, Ti, B, Cr, Mo and REM, with the balance being Fe and inevitable impurities, wherein the thickness of the steel sheet is set as t, and the resistivity of the steel sheet is $0<R_1≤55\mu\Omega\cdot cm$; in the direction starting from an interface between a plating and a steel sheet substrate and towards the steel sheet substrate, the resistivity of the steel sheet within the range of 0.025 t or more to no more than 0.05 t is $0<R_2≤15\mu\Omega\cdot cm$, and the resistivity of the material within the range of 0.01 t or more to no more than 0.015 t is $0<R_3≤35\mu\Omega\cdot cm$; and the resistivities satisfy: $1.5R_1^{1/2}-0.1R_2-0.25R_3>0$.

**Description**

**Technical Field**

The present disclosure relates to an ultra-high strength galvanized steel plate and a manufacturing method thereof, in particular to a 120 Kg grade ultrahigh strength galvanized steel plate having excellent resistance spot welding performance and a manufacturing method thereof.

**Background Art**

In the context of the macro policy of "carbon neutrality and emission peak", more efficient energy saving, emission reduction, and consumption reduction have become an important goal of the automotive industry. Automobile lightweight, represented by body lightweight, is an important technical means to save energy and reduce consumption. In terms of performance, cost, maintainability, ease of recyclability and LCA emission ratings, high-strength steel and ultra-high-strength steel are still the most comprehensive and competitive solutions among many body lightweight materials. Generally, automotive steel with a tensile strength of ≥ 340MPa is called high-strength steel, and automotive steel with a tensile strength of ≥ 780MPa is called ultra-high-strength steel. For ultra-high-strength steel, phase change strengthening + precipitation strengthening is the main means of strengthening, so more alloying elements will be added to the steel grade, including but not limited to C, Si, Mn, Nb, V, Ti, Cr, Mo, etc. In addition to strength, the materials used for the body, especially the materials used in the lower body parts, should also focus on anti-corrosion performance. In addition to coating films, automotive steels with a plating layer also have better corrosion resistance than uncoated materials. Common types of plating layers for high-strength and ultra-high-strength steels include hot-dip pure zinc (GI) layer, hot-dip zinc-iron alloy (GA) layer, electroplating pure zinc (EG) layer and zinc-aluminum-magnesium (MgAlZn) plating layer, etc.

Different from ordinary steel materials, products of high-strength steel, especially ultra-high-strength steel with a plating layer, because of their higher strength and more alloying elements, are prone to a phenomenon called liquid metal embrittlement (LME) in the process of resistance spot welding, the main principle of which is that under the stress during welding, the plating layer on the surface of the material is heated and melted, and the liquid metal penetrates along the grain boundary of the steel plate substrate, resulting in cracks due to the decline of grain boundary adhesion. Factors such as the composition and carbon equivalent of the base metal of the welded joint, the structure, the composition of the plating layer, the weight, the pressure, stress, current, heating time and dwelling time during welding will affect the LME phenomenon. Among them, the greater resistivity of the material, the higher strength of the material, the greater welding current, the greater joint stress, the longer welding heating time, and the shorter dwell time all will worsen the LME phenomenon. For ultra-high-strength steel with a plating layer, the carbon equivalent of the base metal is higher, the heat input is greater during welding, and the higher strength of the base metal itself is easy to cause greater welding stress. These unfavorable factors have seriously restricted the mass and stable application of ultra-high-strength steel with a plating layer on the car body.

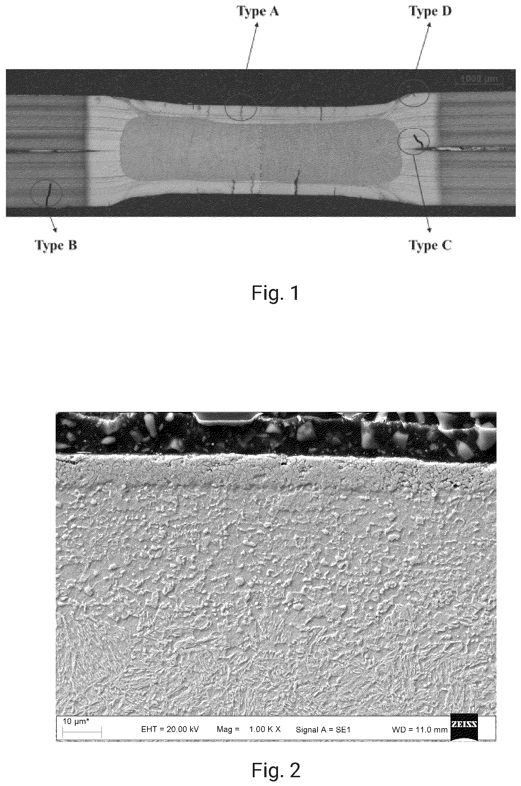

According to different locations of occurrence, LME cracks in resistance spot welding are generally divided into four types in the industry, namely Type A, Type B, Type C and Type D, as shown in Figure 1. Among them, Type A is the crack generated at the direct contact position between the electrode and the material. The temperature of this position is high, and the cracks are easy to appear after the welding splashing, which has little effect on the performance of the welded joint. Type B and Type C are the cracks generated on and between the base metals, and Type D is the crack generated at the shoulder position of welded point, which all have an impact on the performance of the welded joint. Especially, Type C cracks can easily lead to a decrease in the adhesion of welded joints and cause welding point failure and thus it is required to control their number and length. In this regard, the following research is also proposed.

The U.S. patent document with an issue number US11299793B2 and a title of "Steel sheet having excellent resistance to liquid metal embrittlement cracks and method for manufacturing the same" discloses a galvanized steel sheet with excellent resistance to liquid metal embrittlement cracks and a manufacturing method thereof. Its composition is as follows by weight percentage: C: 0.04~0.35%, Al+Si: 0.99% or less, Mn: 3.5-10%, P: 0.05% or less (0% excluded), S: 0.02% or less (0% excluded), N: 0.02% or less (0% excluded), with a balance of Fe and other unavoidable impurities. By volume fraction, the microstructure contains 10% or more of residual austenite, 60% or more of annealed martensite, 20% or less of a martensite and ε martensite, and the average thickness of the Mn depletion layer is from the surface of the product to 0.5 μm or more. This invention has a high Mn content and is suitable for production by headless rolling processes such as ESP and the like. The patent does not mention crack resistance when using the resistance spot welding process.

The U.S. patent document with an issue number US11299793B2 and a title of "Steel sheet having excellent resistance to liquid metal embrittlement cracks and method for manufacturing the same" discloses a galvanized steel sheet with excellent resistance to liquid metal embrittlement cracks and a manufacturing method thereof. Its composition is as follows by weight percentage: C: 0.04~0.35%, Al+Si: 0.99% or less, Mn: 3.5-10%, P: 0.05% or less (0% excluded), S:

0.02% or less (0% excluded), N: 0.02% or less (0% excluded), with a balance of Fe and other unavoidable impurities. By volume fraction, the microstructure contains 10% or more of residual austenite, 60% or more of annealed martensite, 20% or less of a martensite and ε martensite, and the average thickness of the Mn depletion layer is from the surface of the product to 0.5 μm or more. This invention has a high Mn content and is suitable for production by headless rolling processes such as ESP and the like. The patent does not mention crack resistance when using the resistance spot welding process.

In view of the above-mentioned defects of the prior art, it is expected to obtain an ultra-high-strength galvanized steel plate with better resistance to liquid metal embrittlement LME cracks, which can inhibit the generation of Type A, Type B, Type C and Type D.

**Summary**

The object of the present disclosure is to provide a 120 kg grade ultra-high-strength galvanized steel plate with excellent resistance to liquid metal embrittlement LME cracks and excellent resistance spot welding performance. A further object of the present disclosure is to provide a 120 kg grade ultra-high-strength galvanized steel plate with excellent resistance spot welding performance. In the welded joint combination in which one of at least two layers of steel plate is the steel plate according to the present disclosure, when the welding current is $\leq(I_{splash}+I_{splash}*50\%)$, no Type B or Type C cracks will be generated, and when Type A cracks are generated, in all Type A cracks, 1% or less of the total number of Type A cracks will appear when the welding current is $< I_{splash}$, and the length of Type A cracks will not be greater than 5% of the thickness of the base metal plate; when Type D cracks are generated, in all Type D cracks, 99.99% or more of the total number of Type D cracks will appear when the welding current is $\geq I_{splash}$, and the length of Type D cracks will not be greater than 10% of the thickness of the base metal plate.

In order to achieve the above object, the present disclosure provides a 120 Kg grade ultra-high strength galvanized steel plate, which comprises the following chemical elements:

C: 0.18-0.24%,
Mn: 2.3-3.0%,
Si: 0.5-1.7%,
Al: 0.02-1.0%,
0.55<Si+Al≤1.75%,
C+Si/30+Mn/20≤0.395%,
at least one of Nb, Ti, B, Cr, Mo, and REM,
and a balance of Fe and unavoidable impurities, wherein
the thickness of the steel plate is set to t, the resistivity $R_1$ of the steel plate is $0<R_1\leq55\mu\Omega\cdot cm$; in the direction from the interface between the plating layer and the steel plate matrix to the steel plate matrix, the resistivity $R_2$ of the steel plate in the range of 0.025 t to 0.05 t is $0<R_2\leq15\mu\Omega\cdot cm$, and the resistivity $R_3$ of the material in the range of 0.01 t to 0.015 t is $0<R_3\leq35\mu\Omega\cdot cm$, and they satisfy

$1.5R_1^{1/2}-0.1R_2-0.25R_3>0$.

Another embodiment of the present disclosure is a 120 Kg grade ultra-high strength galvanized steel plate, which comprises the following chemical elements in addition to Fe and other unavoidable impurities:

C: 0.18-0.24%,
Mn: 2.3-3.0%,
Si: 0.5-1.7%,
Al: 0.02-1.0%,
0.55<Si+Al≤1.75%,
C+Si/30+Mn/20≤0.395%,
at least one of Nb, Ti, B, Cr, Mo, and REM,
wherein,
the thickness of the steel plate is set to t, the resistivity $R_1$ of the steel plate is $0<R_1\leq55\mu\Omega\cdot cm$; in the direction from the interface between the plating layer and the steel plate matrix to the steel plate matrix, the resistivity $R_2$ of the steel plate in the range of 0.025 t to 0.05 t is $0<R_2\leq15\mu\Omega\cdot cm$, and the resistivity $R_3$ of the material in the range of 0.01 t to 0.015 t is $0<R_3\leq35\mu\Omega\cdot cm$, and they satisfy

$1.5R_1^{1/2}-0.1R_2-0.25R_3>0$.

Further, in the 120 Kg grade ultra-high strength galvanized steel plate provided in the present disclosure, the thickness of the steel plate is set to t, the resistivity $R_1$ of the steel plate is 41-55μΩ·cm; in the direction from the interface between the plating layer and the steel plate matrix to the steel plate matrix, the resistivity $R_2$ of the steel plate in the range of 0.025 t to 0.05 t is 11-15$\mu\Omega\cdot$cm, and the resistivity $R_3$ of the material in the range of 0.01 t to 0.015 t is 24-35$\mu\Omega\cdot$cm, and they satisfy $1.5R_1^{1/2}-0.1R_2-0.25R_3>0$.

In the above technical solutions of the present disclosure, the chemical elements are designed according to the following specific principles:

C: C is a commonly used solution strengthening element in steel, due to its high solubility in austenite, in products of quenching-partitioning process, the carbon in martensite is enriched into residual austenite, which improves the stability of the residual austenite, so as to improve the material elongation by using the TRIP effect of the residual austenite. The ultra-high strength galvanized steel plate of the present disclosure has a tensile strength of 1180MPa or more and elongation at break of 14% or more. If the C content is too low, the ultra-high strength of the material cannot be guaranteed, and at the same time a low C content is not conducive to the formation of stable residual austenite of carbon enrichment, and can also affect the elongation at break of the material. If the C content is too high, it will significantly increase the carbon equivalent, affect the resistance spot welding performance, and also more likely lead to twin crystal, increasing the crack susceptibility. Therefore, in the present disclosure, the mass percentage of C is controlled in the range of 0.18% - 0.24%.

Mn: Mn can improve the hardenability of steel, reduce the critical transition temperature, thereby improving the strength of steel. At the same time, Mn can significantly expand the austenite phase region, reduce the $A_{c3}$, $M_s$ and $M_f$ points, improve the austenite stability, and help to improve the elongation of steel. However, an overly high Mn content will significantly increase the carbon equivalent, which is not conducive to the resistance spot welding performance, and will also aggravate the grain roughening trend, reduce the plasticity and toughness of the steel, and deteriorate the corrosion resistance. Therefore, in the present disclosure, the mass percentage of Mn is controlled in the range of 2.3% - 3.0%.

Si: The solubility of Si in carbides is very small, which can strongly inhibit cementite precipitation, promote carbon enrichment into residual austenite, improve the stability of residual austenite, thereby improving the strength and formability of the material. However, when the Si content is too high, due to the easy formation of Si-containing oxides in the annealing process, the surface plating-ability of the steel plate becomes poor, which is not conducive to obtaining a plating layer with good quality, and the high Si content will also increase the carbon equivalent, which is not conducive to the resistance spot welding performance. Therefore, in the present disclosure, the mass percentage of Si is controlled in the range of 0.5% - 1.7%.

Al: Al has the effect of inhibiting cementite and improving the stability of residual austenite similar to Si. At the same time, Al can not only improve the mechanical stability of residual austenite, but also improve the thermal stability of residual austenite. Al can also form fine and dispersed non-soluble mass points with C and N and refine the grains, so Al can partially replace Si in steel. However, the strengthening effect of Al is weaker than that of Si, and an overly high Al content will also cause significantly increased $A_{c3}$ temperature of steel, which will increase the difficulty of continuous casting and the risk of steel slab cracking. Therefore, in the present disclosure, the mass percentage of Al is controlled in the range of 0.02% - 1.0%.

In the chemical composition design of the present disclosure, the mass percentage of Al and Si elements should also be controlled to meet 0.55%<Al+Si≤1.75%. The reason for the control of this technical feature is as follows: an appropriate amount of Al and Si can not only ensure a certain strengthening effect, promote the stabilization of residual austenite, ensure the strength and elongation of the material, but also will not cause production difficulties due to the difficulty of continuous casting, cracking of the cast billet and the deterioration of plating ability and the like.

Resistivity is closely related to alloying elements, crystal structure, crystal defects and solid dissolution effect. The gradient change of resistivity in the thickness direction reflects the change of structure. The low resistivity in a certain thickness direction from the surface layer can reduce the total heat input in the welding process and can advantageously prevent the formation of cracks. Therefore, in the ultra-high strength galvanized steel plate of the present disclosure, when the thickness of the steel plate is t, the resistivity $R_1$ of the steel plate is 0<$R_1$≤55$\mu\Omega\cdot$cm; in the direction from the interface between the plating layer and the steel plate matrix to the steel plate matrix, the resistivity $R_2$ of the steel plate in the range of 0.025t to 0.05t is 0<$R_2$≤15$\mu\Omega\cdot$cm, and the resistivity $R_3$ of the steel plate in the range of 0.01t to 0.015t is 0<$R_3$≤35$\mu\Omega\cdot$cm, and satisfies $1.5R_1^{1/2}-0.1R_2-0.25R_3>0$, wherein the ranges of $R_1$, $R_2$, $R_3$ and their relationships represent the average resistivity level of the steel plate and the resistivity level of the area where LME cracks are likely to occur during resistance spot welding. In particular, when 0<$R_2$≤15$\mu\Omega\cdot$cm, 0<$R_3$≤35$\mu\Omega\cdot$cm, and $1.5R_1^{1/2}-0.1R_2-0.25R_3>0$, it can be ensured that when the welding current is ≤($I_{splash}$+$I_{splash}$*50%), no Type B or Type C cracks will be generated, and when Type A cracks are generated, in all Type A cracks, 1% or less of the total number of Type A cracks will appear when the welding current is < $I_{splash}$, and the length of Type A cracks will not be greater than 5% of the thickness of the base metal plate; when Type D cracks are generated, in all Type D cracks, 99.99% or more of the total number of Type D cracks will appear when the welding current is ≥ $I_{splash}$, and the length of Type D cracks will not be greater than 10% of the thickness of the base metal plate, wherein $I_{splash}$ is the minimum current at which splashing occurs.

Further, in the 120 Kg grade ultra-high strength galvanized steel plate of the present disclosure, the contents of Nb, Ti, B, Cr, Mo, REM are as follows:

$$0 \leq Nb \leq 0.1\%;$$

$$0 \leq Ti \leq 0.1\%;$$

$$0 \leq B \leq 0.003\%;$$

$$0 \leq Cr \leq 0.1\%;$$

$$0 \leq Mo \leq 0.1\%;$$

$$0 \leq REM \leq 0.05\%.$$

Furthermore, in the 120 Kg grade ultra-high strength galvanized steel plate of the present disclosure, if present, the contents of Nb, Ti, B, Cr, Mo, REM are as follows:

Nb: 0.08-0.1%;
Ti: 0.01-0.02%;
B: 0.0004-0.0023%;
Cr: 0.05-0.1%;
Mo: 0.02-0.1%;
REM: 0.0035-0.05%.

Nb and Ti are carbide forming elements, which can inhibit cementite precipitation. Fine Nb and Ti carbides can also refine grains and improve strength, but Nb and Ti carbides are not conducive to the stabilization of residual austenite, and the addition of Nb and Ti will also increase the cost of alloy material. Therefore, the mass percentage of Nb and Ti in the present disclosure is controlled in the range of 0~0.1%.

B is prone to segregate at austenite grain boundaries, inhibit austenite transformation, improve the hardenability of steel, thereby improving the strength, but an overly high B content will deteriorate the formability of steel and increase the risk of cracking. Therefore, in the present disclosure, the mass percentage of B is controlled in the range of 0 - 0.003%.

Cr and Mo are elements that promote phase transformation strengthening and enhance the stability of austenite, which can improve the resistance of austenite to tempering and decomposition. However, overly high Cr and Mo contents will inhibit the bainite transition, which is not conducive to the enrichment of C into austenite, thereby weakening the stability of austenite, and Mo will also significantly improve the cold-rolled deformation resistance of steel and increase the difficulty of cold-rolling production. Therefore, the mass percentage of Cr and Mo in the present disclosure is controlled at 0-0.1%.

REM is a general term for rare earth elements, and the commonly used rare earths in steel grades are mainly La, Ce mixtures, and other rare earth elements other than La and Ce are not excluded. REM has the effect of purifying grain boundaries and metamorphosing inclusions, but the formability of the material will be damaged when its content is too high. Therefore, the mass percentage of REM in the present disclosure is controlled to be 0.01% or less.

Further, among other unavoidable impurities in the present disclosure, P is ≤0.015%, S is ≤0.010%, N is ≤0.008%.

P, S and N are unavoidable impurity elements in steel. An overly high P content will weaken the grain boundaries, increase the risk of brittle cracking, and deteriorate the welding performance. S as an impurity element, will affect the formability and welding performance of steel. N can improve the stability of austenite and have a certain strengthening effect, but an overly high N content will increase the risk of brittleness, and it is easy to precipitate AlN, which will reduce the quality of continuous casting. Therefore, the mass percentage of P, S, N in the present disclosure is controlled to be 0.015% or less, 0.010% or less, and 0.010% or less, respectively.

Further, for the 120 Kg grade ultra-high strength galvanized steel plate of the present disclosure, when Type III specimens according to ISO 6892-1 standard are stretched at room temperature perpendicularly to the rolling direction, the steel plate has a tensile strength of ≥ 1180MPa, a yield strength of ≥800MPa, an elongation at break of ≥14%, and a hole expansion ratio of ≥ 30%.

Further, for the 120 Kg grade ultra-high strength galvanized steel plate of the present disclosure, the steel plate is configured as a GA plate or a GI plate.

Further, for the 120 Kg grade ultra-high strength galvanized steel plate of the present disclosure, the thickness of the steel plate is 0.8-2.5mm.

Further, for the 120 Kg grade ultra-high strength galvanized steel plate of the present disclosure, when the welding current is ≤1.5*$I_{splash}$, Type B or Type C LME cracks will not appear, and if Type D cracks appear, the length of Type D cracks is less than 10% of the thickness of the base metal; when the welding current is < $I_{splash}$, Type B, Type C or Type D cracks will not appear, and if Type A cracks occur, the length is less than 5% of the thickness of the base metal, wherein $I_{splash}$ is the minimum current at which splashing occurs.

A second aspect of the present disclosure is a manufacturing method for the above 120 Kg grade ultra-high strength galvanized steel plate, which comprises the following steps:

(1) Smelting and continuous casting;
(2) Hot rolling;
(3) Pickling and cold rolling;
(4) Continuous annealing;
(5) Galvanizing.

In step (1), a cast billet that satisfies the composition of the present disclosure is obtained.

In step (2), the cast billet obtained in step (1) is heated, subjected to final rolling, laminar flow cooling and coiling to obtain a hot-rolled coil. In step (2), the heating temperature is in the range of 1150~1300 °C, the temperature of the final rolling is in the range of $A_{c3}$~1000 °C, the holding temperature of laminar flow cooling is in the range of ($A_{c1}\pm 45$°C), and the laminar flow cooling residence time is 5~30s, and then the steel is cooled to 550~650 °C and coiled with a coiling temperature set to $T_C$, and the coiled steel coil is thermally insulated in the range of (a coiling temperature of $T_C\pm 30$°C) for 30~300min.

Further, in step (2), the heating temperature is in the range of 1165~1270 °C; the temperature of the final rolling is in the range of 885-945°C; the holding temperature of laminar flow cooling is in the range of 680-720°C with the residence time of 7~26s; the coiling temperature is 550-645°C, and the holding time after coiling is 45~270min.

In step (3), the hot-rolled coil obtained in step (2) is pickled, cold-rolled to obtain a cold rolled coil without annealing.

In step (4), the cold rolled coil without annealing obtained in step (3) is subjected to a multi-stage heat treatment. The multi-stage heat treatment comprises the following (a)~(d):

(a) First stage annealing: the cold rolled coil without annealing is heated to a first stage temperature in the range of not less than 600 °C ~ ($A_{c1}$ + 40 °C) to obtain a steel coil,
(b) Second stage annealing: the steel coil obtained in (a) is further heated to a second stage temperature in the range of ($A_{c1}$+50°C)~($A_{c3}$+80°C) or ($A_{c1}$+50°C)~900°C, and held for 30 ~ 300s to obtain a strip steel, wherein the smaller value from ($A_{c3}$+80°C) and 900°C is taken as the upper limit of the second stage temperature range,
(c) Third stage annealing: the strip steel obtained in (b) is cooled to a third stage temperature in the range of $M_s$~$M_f$ at a cooling rate that is no less than a certain cooling rate $V_{2-3}$ and held for 10~120s,
(d) Fourth stage annealing, the strip steel obtained in (c) is heated again to a fourth stage temperature in the range of (350°C~$T_{ZP}$) and held for 15~90s,

wherein, in step (4), the atmosphere in (a) contains 0.01-0.5% of $O_2$ by volume, with a balance of $N_2$ and unavoidable impurities; the atmosphere in (b) contains at least 1.5% by volume of $H_2$, 0.2% or less by volume of water vapor, with a balance of $N_2$ and unavoidable impurities, and a dew point of -25~10 °C; in (c), $V_{2-3}$ represents the cooling rate, which is not less than 50°C/s, such as 50-1000°C/s; in (d), $T_{ZP}$ is the temperature of the zinc pot; preferably, $T_{ZP}$ is 458-461°C.

Further, in step (4), the heating temperature in (a) is 680-720°C; in (b), the heating temperature is 830-900°C, and the soaking time is 30-145s; in (c), the third stage temperature is 220-310°C, and the holding time is 25-110s; in (d), the heating temperature is 355-420°C, and the holding time is 20-86s.

In the manufacturing method for the ultra-high strength galvanized steel plate of the present disclosure, in step (2), the strip steel after hot rolling is cooled to the range of ($A_{c1}\pm 45$°C) and held for 5~30s, in which step-cooling is conducted through the control of laminar flow cooling process, so that the hot-rolled strip steel can undergo as much ferrite phase transformation as possible during the residence time, reduce the difference in structure and properties along the plate width, and improve the plate shape quality of the strip. The coiled steel coil stays in the range of ($T_C\pm 30$°C) for 30~300min in order to allow the strip steel to have sufficient time to undergo bainite phase transformation or pearlite phase transformation, reduce the martensite generation of hard phase, and make the strip steel have lower strength, which is conducive to cold rolling.

In the manufacturing method for the ultra-high strength galvanized steel plate of the present disclosure, the multi-stage annealing in step (4) is a quenching-partitioning process. The first stage annealing is the preheating and pre-oxidation process of the strip steel, which can inhibit the external oxidation of Si, Mn and other elements of the steel grade and promote the oxidation of Fe by controlling the $O_2$ content in the atmosphere. The second stage annealing is a heating/soaking process, which is also an internal oxidation process, and the strip steel is heated in the austenite single-phase zone or the ferrite+austenite duplex zone by controlling the annealing temperature to obtain an appropriate proportion of austenite. By controlling the annealing atmosphere and dew point, the internal oxidation of Si, Mn and other elements occurs. The third stage annealing is the quenching process, the strip is quenched to $M_s$~$M_f$ at a cooling rate not lower than that of the high-hydrogen cooling method, so that the austenite generated in the heating/soaking stage is transformed into martensite + residual austenite, and the amount of martensite generated is determined by the quenching temperature. The fourth stage annealing is a reheating and partitioning process, and the annealing temperature is controlled in the range of ($350°C$~$T_{ZP}$), which can not only promote the diffusion and enrichment of carbon in martensite to austenite, but also avoid the significant decrease in strength caused by drastic martensite tempering at an overly high partitioning temperature. The strip steel obtained after the fourth stage annealing enters the zinc pot at a temperature of ($T_{ZP}\pm15°C$) for galvanizing. When the galvanized steel plate is hot-dip galvanized steel plate with a zinc plating layer, the steel plate is cooled to room temperature after it is discharged from the zinc pot to obtain the final product; when the galvanized steel plate is hot-dip galvanized steel plate with a zinc iron alloy plating layer, the strip steel is discharged from the zinc pot, and then heated for alloying. Too low alloying temperature will cause underalloying, and too high alloying temperature will cause decomposition of residual austenite due to decreased stability, affecting the elongation of the final product, so the alloying temperature is controlled at ($TZP-20 °C$) ~ ($TZP + 35 °C$). If the alloying time is too short, the strip steel will not have sufficient time for full alloying, and if the alloying time is too long, the iron content in the plating layer will be too high, which will deteriorate the powdering resistance of the plating layer, so the alloying time is controlled at 5~30s.

In order to obtain a better implementation effect, in some preferred embodiments, the cast billet heating temperature in step (2) is controlled at 1200~1280°C, to prevent excessive finish rolling force caused by the heating temperature being too low or prevent the billet from being overburned and the grain too coarse due to the heating temperature being too high.

In order to obtain a better implementation effect, in some preferred embodiments, the finish rolling temperature in step (2) is controlled to be ($A_{c3}+20°C$)~$950°C$.

In order to obtain a better implementation effect, in some preferred embodiments, in the laminar flow cooling process of the strip steel in step (2), the temperature is controlled in the range of ($A_{c1}-20°C$)~($A_{c1}+30°C$) and held for 7~16s.

In order to obtain a better implementation effect, in some preferred embodiments, in the process of thermal insulation of the strip steel after coiling in step (2), the residence time is controlled to be 120~240min.

In order to obtain a better implementation effect, in some preferred embodiments, in the annealing process of step (4), the second stage annealing temperature is controlled to be ($A_{c1}+70°C$)~($A_{c3}+80°C$) or ($A_{c1}+70°C$)~$900°C$, the holding time is controlled to be 35~120s, and the smaller value from ($A_{c3}+80°C$) and $900°C$ is taken as the upper limit of the second stage temperature range.

In order to obtain a better implementation effect, in some preferred embodiments, in the annealing process of step (4), the atmosphere in the second stage temperature range contains 4~25% by volume of $H_2$, 0.05%~0.10% by volume of water vapor, with a balance of $N_2$ and unavoidable impurities, and a dew point of -15~0°C.

In order to obtain a better implementation effect, in some preferred embodiments, in the annealing process of step (4), the fourth stage temperature is in the range of $350°C$~($T_{ZP}-35°C$), and the holding time is 30~60s.

In order to obtain a better implementation effect, in some preferred embodiments, in the annealing process of step (4), the strip steel enters into the zinc pot at a temperature of ($T_{ZP}\pm10°C$).

In order to obtain a better implementation effect, in some preferred embodiments, in the annealing process of step (4), the alloying temperature is in the range of ($T_{ZP}-10°C$)~($T_{ZP}+25°C$), and the holding time is 10~20s.

The 120 kg ultra-high-strength galvanized steel plate with excellent resistance spot welding performance according to the present disclosure and the manufacturing method therefor have the following advantages and beneficial effects compared with the prior art:

(1) For the 120 kg ultra-high-strength galvanized steel plate, the present disclosure inhibits the occurrence of LME cracks in the resistance spot welding process for the first time by limiting the resistivity of different areas in the thickness direction of the steel plate and the average resistivity of the steel plate and obtains the ultra-high-strength galvanized steel plate with excellent resistance spot welding performance.

(2) In the welded joint combination in which one of at least two layers of steel plate is the 120 kg ultra-high-strength galvanized steel plate according to the present disclosure, when the welding current is $\leq(I_{splash}+I_{splash}*50\%)$, no Type B or Type C cracks will be generated, and when Type A cracks are generated, in all Type A cracks, 1% or less of the total number of Type A cracks will appear when the welding current is $< I_{splash}$, and the length of Type A cracks will not be greater than 5% of the thickness of the base metal plate; when Type D cracks are generated, in all Type D cracks, 99.99% or more of the total number of Type D cracks will appear when the welding current is $\geq I_{splash}$, and the length of Type D cracks will not be greater than 10% of the thickness of the base metal plate, wherein $I_{splash}$ is the minimum current at which splashing occurs.

(3) The composition of the ultra-high-strength galvanized steel plate of the present disclosure is simple. Through the precise control of laminar flow cooling during hot rolling, hot-rolling, coiling and thermal insulation, and continuous annealing process, the obtained steel plate having a tensile strength of ≥1180MPa, a yield strength of ≥800MPa, an elongation at break of ≥14%, and a hole expansion ratio of ≥30% has excellent resistance spot welding performance.

(4) The process equipment required for the production of ultra-high strength galvanized steel plate of the present disclosure is simple and can realize stable production in batch. The comprehensive properties of the material make it able to meet the manufacture of body parts with complex shapes, and the material has excellent resistance spot welding performance and corrosion resistance

**Description of the drawings**

Fig. 1 schematically shows the relative positions of the four kinds of resistance spot welding LME cracks of the present disclosure.

Fig. 2 illustratively shows the change of microstructure of the steel plate (not including the zinc layer) of the present disclosure in the thickness direction.

**Detailed Description**

Specific embodiments will be further explained and illustrated below with reference to the specific examples. However, such explanation and illustration do not constitute any improper limitation on the technical solution of the present disclosure.

In the present disclosure, "galvanizing" refers to hot-dip zinc galvanizing or hot-dip zinc iron alloy galvanizing.

In the present disclosure, $A_{c1}$ refers to the temperature at which the pearlite transforms into austenite when heated, and the unit is °C.

In the present disclosure, $A_{c3}$ refers to the final temperature of transforming into austenite when heated, and the unit is °C.

In the present disclosure, $T_C$ refers to the coiling temperature in step (2), and the unit is °C.

In the present disclosure, $M_s$ is the temperature at which "martensite" appears, and $M_f$ is the temperature of full martensitization, and the unit is °C.

In the present disclosure, $T_{ZP}$ represents the zinc pot temperature, and the unit is °C.

In the present disclosure, $V_{2-3}$ represents the cooling rate.

**Examples 1-12 and Comparative Examples 1-2**

Table 1 lists the mass percentages of the various chemical elements of the ultra-high-strength galvanized steel plates of Examples 1-12 and the galvanized steel plates of Comparative Examples 1-2.

Table 1.(wt%, the balance is Fe and other unavoidable impurities except P, S and N)

| Steel grade | Chemical elements | | | | | | | | | | | | | | | | |
|---|---|---|---|---|---|---|---|---|---|---|---|---|---|---|---|---|---|
| | C | Si | Mn | Al | Nb | Ti | Cr | Mo | B | REM | P | S | N | Sb | Sn | $A_{c1}$ | $A_{c3}$ |
| A | 0.180 | 0.88 | 2.92 | 0.85 | - | - | - | - | 0.0004 | - | 0.0009 | 0.0008 | 0.004 | - | | 698 | 888 |
| B | 0.188 | 0.95 | 2.73 | 0.71 | - | 0.01 | - | - | - | - | 0.0011 | 0.0006 | 0.003 | - | | 702 | 878 |
| C | 0.197 | 1.67 | 2.58 | 0.023 | - | - | 0.05 | 0.02 | - | - | 0.0014 | 0.0004 | 0.005 | - | | 707 | 822 |
| D | 0.209 | 1.13 | 2.55 | 0.53 | - | 0.02 | - | - | 0.0010 | - | 0.0012 | 0.0007 | 0.004 | - | | 708 | 863 |
| E | 0.222 | 0.75 | 2.48 | 0.60 | - | - | - | - | 0.0023 | - | 0.001 | 0.001 | 0.007 | - | | 706 | 855 |
| F | 0.235 | 0.58 | 2.37 | 0.86 | 0.08 | - | - | - | - | 0.0035 | 0.0012 | 0.0009 | 0.003 | | | 710 | 881 |
| CEx.1 | 0.204 | 1.542 | 2.32 | ***0.0017*** | 0 | 0.018 | 0 | 0 | 0.0007 | - | - | - | - | 0 | ***0.012*** | 708 | 823 |
| CEx.2 | 0.184 | 1.121 | ***2.234*** | ***0.0012*** | 0.013 | 0.027 | ***0.14*** | 2.012 | 0.0005 | - | - | - | - | ***0.014*** | 0 | 704 | 815 |

The ultra-high-strength galvanized steel plates of Examples 1-12 were prepared by the following steps:

(1) Smelting and continuous casting to obtain a cast billet that satisfies the composition of the present disclosure;
(2) Hot rolling: the cast billet obtained in step (1) was heated in the range of 1150~1300 °C, subjected to final rolling in the range of $A_{c3}$~1000 °C; the strip steel after final rolling was cooled to the range of ($A_{c1} \pm 45°C$), and the laminar flow cooling residence time was 5~30s, then cooled to 550~650 °C and coiled with a coiling temperature of $T_C$, and the coiled steel coil was kept in the range of ($T_C \pm 30°C$) for 30~300min to obtain the hot-rolled coil;
(3) Pickling and cold rolling: the hot-rolled coil obtained in step (1) was pickled, cold-rolled to obtain a cold rolled coil without annealing;
(4) Continuous annealing: the cold rolled coil without annealing obtained in step (3) was subjected to a multi-stage heat treatment,

(a) First stage annealing: the cold rolled coil without annealing was heated to a first stage temperature in the range of not less than 600 °C ~ ($A_{c1}$ + 40 °C) to obtain a steel coil;
(b) Second stage annealing: the steel coil obtained in (a) was further heated to a second stage temperature in the range of ($A_{c1}+50°C$)~($A_{c3}+80°C$) or ($A_{c1}+50°C$)~900°C, and held for 30 ~ 300s to obtain a strip steel,
(c) Third stage annealing: the strip steel obtained in (b) was cooled to a third stage temperature in the range of $M_s$~$M_f$ at a cooling rate that is no less than a certain cooling rate $V_{2-3}$ and held for 10~200s;
(d) Fourth stage annealing: the strip steel obtained in (c) was heated again to a fourth stage temperature in the range of (350°C~$T_{ZP}$) and held for 15~90s,

wherein, in step (4), the atmosphere in (a) contained 0.01-0.5% of $O_2$ by volume, with a balance of $N_2$ and unavoidable impurities; the atmosphere in (b) contained at least 1.5% by volume of $H_2$ and 0.2% or less by volume of water vapor, with a balance of $N_2$ and unavoidable impurities, and a dew point of -20~15 °C; the smaller value from ($A_{c3}+80°C$) and 900°C was taken as the upper limit of the second stage temperature range; in (c), $V_{2-3}$ represented the cooling rate, which was not less than 50°C/s; in (d), $T_{ZP}$ was the temperature of the zinc pot;
(5) Galvanizing: the strip steel obtained after the fourth stage annealing (d) in step (4) entered the zinc pot at a temperature of ($T_{ZP} \pm 15°C$) for galvanizing, to obtain a galvanized steel plate, wherein, when the galvanized steel plate was hot-dip galvanized steel plate with a zinc plating layer, the steel plate with a zinc plating layer was cooled to room temperature after it was discharged from the zinc pot, and when the galvanized steel plate was hot-dip galvanized steel plate with a zinc iron alloy plating layer, the hot-dip galvanized steel plate with a zinc iron alloy plating layer was thermally insulated in the range of ($T_{ZP}-20°C$)~($T_{ZP}+35°C$) for alloying for 5~60s, and then cooled to room temperature.

Tables 2-1 and 2-2 list the specific process parameters for the ultra-high-strength galvanized steel plates of Examples 1-12.

Table 2-1

| No. | Ingredient | Heating temperature /°C | Final rolling temperature /°C | Laminar flow cooling insulation temperature /°C | Laminar cooling residence time /s | Coiling temperature /°C | Holding time after coiling /min |
|---|---|---|---|---|---|---|---|
| Ex. 1 | A | 1165 | 880 | 680 | 26 | 550 | 270 |
| Ex. 2 | A | 1190 | 885 | 680 | 25 | 550 | 240 |
| Ex. 3 | B | 1200 | 897 | 690 | 18 | 570 | 210 |
| Ex. 4 | B | 1210 | 900 | 690 | 20 | 570 | 180 |
| Ex. 5 | C | 1260 | 935 | 700 | 15 | 590 | 180 |
| Ex. 6 | C | 1270 | 945 | 703 | 13 | 590 | 150 |
| Ex. 7 | D | 1250 | 930 | 715 | 10 | 600 | 150 |
| Ex. 8 | D | 1250 | 935 | 720 | 7 | 600 | 120 |
| Ex. 9 | E | 1220 | 910 | 708 | 10 | 625 | 120 |
| Ex. 10 | E | 1240 | 920 | 722 | 8 | 625 | 90 |

(continued)

| No. | Ingredient | Heating temperature /°C | Final rolling temperature /°C | Laminar flow cooling insulation temperature /°C | Laminar cooling residence time /s | Coiling temperature /°C | Holding time after coiling /min |
|---|---|---|---|---|---|---|---|
| Ex. 11 | F | 1260 | 940 | 725 | 9 | 645 | 90 |
| Ex. 12 | F | 1250 | 930 | 717 | 12 | 645 | 45 |

Table 2-2

| No. | Ingredient | Plating layer | Preheating temperature (first stage) /°C | Heating/ soaking temperature (second stage) /°C | Soaking time /s | dew point /°C | Rapid cooling temperature (third stage) /°C | Rapid cooling holding time /s | Reheating temperature (fourth stage) /°C | Reheating holding time /s | Temperature for entering zinc pot /°C | Zinc pot temperature /°C | Alloying temperature /°C | Alloying temperature /s |
|---|---|---|---|---|---|---|---|---|---|---|---|---|---|---|
| Ex. 1 | A | GA | 680 | 830 | 30 | -25 | 220 | 25 | 355 | 86 | 455 | 458 | 490 | 8 |
| Ex. 2 | A | GI | 690 | 840 | 50 | -20 | 230 | 40 | 375 | 73 | 460 | 457 | | |
| Ex. 3 | B | GI | 690 | 840 | 60 | -17 | 245 | 35 | 395 | 60 | 460 | 460 | | |
| Ex. 4 | B | GA | 690 | 850 | 45 | -13 | 250 | 55 | 410 | 45 | 455 | 461 | 470 | 25 |
| Ex. 5 | C | GA | 700 | 870 | 35 | -5 | 270 | 70 | 370 | 75 | 460 | 463 | 465 | 40 |
| Ex. 6 | C | GI | 690 | 850 | 95 | -9 | 260 | 45 | 410 | 55 | 465 | 461 | | |
| Ex. 7 | D | GI | 680 | 840 | 300 | 0 | 240 | 60 | 385 | 62 | 460 | 460 | | |
| Ex. 8 | D | GA | 700 | 860 | 120 | 3 | 260 | 85 | 405 | 45 | 455 | 459 | 475 | 35 |
| Ex. 9 | E | GI | 690 | 855 | 145 | 8 | 250 | 70 | 410 | 40 | 460 | 460 | | |
| Ex. 10 | E | GA | 700 | 875 | 100 | 5 | 270 | 90 | 420 | 20 | 455 | 461 | 455 | 55 |
| Ex. 11 | F | GI | 710 | 885 | 85 | 2 | 290 | 102 | 405 | 27 | 455 | 460 | | |
| Ex. 12 | F | GA | 715 | 895 | 100 | -3 | 305 | 113 | 415 | 35 | 460 | 458 | 480 | 30 |

GI: the plating layer is pure zinc layer,
GA: the plating layer is zinc-iron alloy.

The ultra-high-strength galvanized steel plates of Examples 1-12 and the galvanized steel plates of Comparative Examples 1-2 were tested for mechanical properties and resistance spot welding performance, and the obtained test results are listed in Table 3.

The following methods were used to determine the mechanical properties, resistivity and resistance spot welding performance:

Mechanical properties: the test sample was stretched and processed in accordance with the requirements of Type III specimen in the ISO 6892-1 standard perpendicularly to the rolling direction of the steel plate, and the tensile strength TS, the yield strength YS and elongation at break EL were determined by stretching the sample at room temperature. It should be emphasized that, due to the difference in measurement methods and the difference in the geometric dimensions of the specimen, there is a difference between the elongation at break measured according to the ISO 6892-1 standard and the elongation at break measured according to the JIS Z2241 standard, GB/T 228.1 standard, and the differences in the measured value of the elongation at break due to the difference between the reference standards all belong to the protection scope of the ultra-high-strength galvanized steel plate of the present disclosure.

Hole expansion ratio: the sample was processed according to the ISO 16630 standard, and the hole expansion ratio was detected at room temperature according to the requirements of the standard to determine the hole expansion ratio HER. It should be emphasized that, due to the difference in measurement methods and the difference in the geometric size of the specimen, there is a difference between the hole expansion ratio measured according to the ISO 16630 standard and the hole expansion ratio measured according to the JFS T1001 standard, GB/T 15825.4 standard, and the differences in the measured value of the hole expansion ratio caused by the difference between the reference standards all belong to the protection range of the ultra-high strength galvanized steel plate of the present disclosure.

Resistivity: a steel plate having a certain area was taken and processed by processing methods including but not limited to grinding machine, wire-electrode cutting, milling machine, etc. The full thickness of the steel plate was taken as t, and the sample in the range of 0.010t to 0.035t and 0.01t to 0.015t was taken and detected for the resistivity $R_1$, $R_2$, $R_3$ of the sample with a resistivity measuring equipment.

LME cracks: the welded joints were cut and polished, corroded and the cross sections of the welded joints were observed by a microscope (usually an optical microscope) at a certain magnification to determine the length of different types of cracks on the observed welded joints.

The ultra-high-strength galvanized steel plates of Examples 1-12 were tested for mechanical properties, resistivity and resistance spot welding, and the test results obtained are listed in Table 3, wherein $I_{splash}$ is the minimum current at which splashing occurs. The resistance spot welding performance tested for the galvanized steel plates of Comparative Examples 1-2 is shown in Table 4.

Table 3

| No. | Plating layer | Thickness /mm | TS/ MPa | YS/ MPa | TEL/ % | HER/ % | $R_1/\mu\Omega\cdot$c-m | $R_2/\mu\Omega\cdot$c-m | $R_3/\mu\Omega\cdot$c-m | Welding current (kA) | $I_{splash}$(kA) | Type A/ $\mu$m | Type B/ $\mu$m | Type C/ $\mu$m | Type D/ $\mu$m |
|---|---|---|---|---|---|---|---|---|---|---|---|---|---|---|---|
| Ex. 1 | GI | 1.2 | 1205 | 893 | 18.5 | 33 | 41.2 | 14.4 | 24.5 | $I_{splash}$ | 10.5 | 68 | N/D | N/D | 23 |
| Ex. 2 | GA | 1.2 | 1230 | 932 | 17.1 | 33 | 41.5 | 14.5 | 24.8 | $0.95*I_{splash}$ | 10.3 | N/D | N/D | N/D | N/D |
| Ex. 3 | GA | 1.2 | 1218 | 901 | 18.3 | 35 | 42.0 | 13.8 | 25.0 | $0.90*I_{splash}$ | 10.0 | 5.5 | N/D | N/D | N/D |
| Ex. 4 | GI | 1.2 | 1222 | 845 | 20.2 | 31 | 41.8 | 13.3 | 24.5 | $I_{splash}+I_{splash}*10\%$ | 9.8 | 69 | N/D | N/D | 52 |
| Ex. 5 | GI | 1.2 | 1238 | 992 | 16.8 | 38 | 47.1 | 13.8 | 28.5 | $0.80*I_{splash}$ | 9.5 | 57 | N/D | N/D | N/D |
| Ex. 6 | GA | 1.2 | 1197 | 967 | 17.5 | 42 | 47.5 | 14.1 | 28.8 | $I_{splash}+I_{splash}*15\%$ | 9.6 | 72 | N/D | N/D | 111 |
| Ex. 7 | GA | 1.2 | 1185 | 1003 | 16.5 | 47 | 45.2 | 12.3 | 27.1 | $I_{splash}+I_{splash}*5\%$ | 10.0 | 97 | N/D | N/D | 35 |
| Ex. 8 | GI | 1.2 | 1222 | 945 | 15.8 | 36 | 44.9 | 12.0 | 26.9 | $I_{splash}+I_{splash}*45\%$ | 10.0 | 108 | N/D | N/D | 81 |
| Ex. 9 | GI | 1.2 | 1210 | 1021 | 15.2 | 44 | 43.6 | 11.4 | 26.0 | $I_{splash}+I_{splash}*20\%$ | 10.7 | 41 | N/D | N/D | N/D |
| Ex. 10 | GA | 1.2 | 1254 | 1067 | 14.3 | 39 | 44.0 | 11.8 | 26.3 | $I_{splash}+I_{splash}*35\%$ | 11.2 | N/D | N/D | N/D | 44 |
| Ex. 11 | GA | 1.2 | 1247 | 1030 | 15.5 | 37 | 44.2 | 11.5 | 26.2 | $I_{splash}$ | 11.4 | N/D | N/D | N/D | N/D |
| Ex. 12 | GI | 1.2 | 1263 | 979 | 14.9 | 32 | 44.5 | 12.0 | 26.7 | $I_{splash}$ | 11.7 | N/D | N/D | N/D | N/D |

TS: tensile strength,
YS: yield strength,
TEL: elongation at break,
HER: hole expansion ratio,
N/D: Not detected.

EP 4 549 608 A1

The resistance spot welding performance test of the galvanized steel plate of Comparative Examples 1-2 was carried out, and the test results obtained are listed in Table 4.

Table 4

| No. | Plating layer | Thickness/mm | Welding current | Type A/ $\mu$m | Type B/ $\mu$m | Type C/ $\mu$m | Type D/ $\mu$m |
|---|---|---|---|---|---|---|---|
| CEx.1 | GI | -1.4 | - | - | N/D | 452 | - |
| CEx.2 | GA | -1.4 | - | - | 65 | 548 | - |

As can be seen from Table 1-3, the chemical elements of the steel grade used in Examples 1-12 of the present disclosure satisfy the requirement of the present disclosure. Therefore, the ultra-high-strength galvanized steel plate obtained in Examples 1-12 according to the method of the present disclosure has a tensile strength of $\geq$ 1180MPa, a yield strength of $\geq$800MPa, an elongation at break of $\geq$ 14%, a hole expansion ratio of $\geq$ 30%, and the resistivity satisfies the present disclosure. Therefore, when the steel plates of Examples 1-12 adopted the welding current of $\leq(I_{splash}+I_{splash}*50\%)$, no Type B or Type C cracks were generated, and when the welding current was < $I_{splash}$, Type A LME cracks did not appear, or when Type A LME cracks appeared, the length of Type A cracks was not greater than 5% of the thickness of the base metal plate. For example, in Examples 2 and 3, the lengths of Type A LME cracks were 0.5% of the thickness of the base metal, respectively. When the welding current was $\geq I_{splash}$, Type D LME cracks did not appear, or when Type D LME cracks appeared, the length of Type D cracks was not greater than 10% of the thickness of the base metal plate. For example, in Example 6, where the length of the Type D LME cracks was the longest in examples, the length of the Type D type cracks was 9.2% of the thickness of the base metal.

In contrast, Comparative Example 1 and Comparative Example 2 are existing steel plates, which were not produced by the manufacturing method of the steel plates of the present disclosure. Only the chemical elements Al and Sn in the steel grade of the steel plate of Comparative Example 1 did not satisfy the present disclosure. The chemical elements Mn, Al, Cr, Sb in the steel grade of Comparative Example 2 did not satisfy the present disclosure. When resistance spot welding was carried out, the Type C cracks that had a greater impact on the base metal was produced in the steel plate of Comparative Examples 1 and 2, and the Type C cracks that appeared in Comparative Examples 1 and 2 accounted for 32.3% and 39.1% of the thickness of the base metal respectively, and the cracks were larger. Compared with the steel in the examples of the present disclosure, the liquid metal embrittlement LME crack resistance and the resistance spot welding performance of the steel in the Comparative Example were obviously poor.

It can be seen that, the LME cracks of the ultra-high-strength galvanized steel plate obtained in Examples 1-12 has been suppressed by optimizing the chemical elements and controlling the manufacturing process, and the resistance spot welding performance is excellent.

Based on the above, it can be seen that through the reasonable design of chemical composition combined with the optimization process, the ultra-high-strength galvanized steel with excellent tensile strength, yield strength, elongation at break, and hole expansion ratio and having excellent resistance spot welding performance can be obtained in the present disclosure. In the welded joint combination in which one of at least two layers of steel plate is the steel plate according to the present disclosure, when the welding current is $\leq(I_{splash}+I_{splash}*50\%)$, no Type B or Type C cracks will be generated, and when Type A cracks are generated, 1% or less of the total number of Type A cracks will appear when the welding current is < $I_{splash}$, and the length of Type A cracks will not be greater than 5% of the thickness of the base metal plate; when Type D cracks are generated, 99.99% or more of the total number of Type D cracks will appear when the welding current is $\geq I_{splash}$, and the length of Type D cracks will not be greater than 10% of the thickness of the base metal plate. The 120 kg grade ultra-high-strength galvanized steel plate in the present disclosure has excellent resistance to liquid metal embrittlement LME cracks and resistance spot welding performance. It can realize stable production in batch and the comprehensive properties of the material make it able to meet the manufacture of body parts with complex shapes, and the material has excellent resistance spot welding performance and corrosion resistance, can be effectively applied to the manufacture of automobile body structure, meets the current development needs of automotive steel for automobile lightweight and safety, and has broad application prospects.

It should be noted that the prior art of the protection scope of the present disclosure is not limited to the examples given in the application documents, and all prior arts that do not conflict with the solution of the present disclosure, including but not limited to prior patent documents, prior publications, prior public use, etc., can be included in the protection scope of the present disclosure. In addition, combinations of the various technical features in this case are not limited to the combinations described in the claims of this case or the combinations described in the specific examples. All technical features recorded in this case can be combined freely or associated in any way unless a contradiction occurs.

It should also be noted that the examples listed above are only specific embodiments of the present disclosure. Obviously, the present disclosure is not limited to the above examples, and changes or modifications made thereto can be directly derived from the present disclosure or easily conceived of by those skilled in the art, all of which fall within the protection scope of the present disclosure.

**Claims**

1. A 120 Kg grade ultra-high strength galvanized steel plate, which comprises the following chemical elements:

   C: 0.18-0.24%,
   Mn: 2.3-3.0%,
   Si: 0.5-1.7%,
   Al: 0.02-1.0%,

$$0.55 < Si + Al \leq 1.75\%,$$

$$C + Si/30 + Mn/20 \leq 0.395\%,$$

   at least one of Nb, Ti, B, Cr, Mo and REM,
   and a balance of Al and unavoidable impurities, wherein
   the thickness of the steel plate is set to t, the resistivity $R_1$ of the steel plate is $0 < R_1 \leq 55 \mu\Omega \cdot cm$; in the direction from the interface between the plating layer and the steel plate matrix to the steel plate matrix, the resistivity $R_2$ of the steel plate in the range of 0.025 t to 0.05 t is $0 < R_2 \leq 15 \mu\Omega \cdot cm$, and the resistivity $R_3$ of the steel plate in the range of 0.01 t to 0.015 t is $0 < R_3 \leq 35 \mu\Omega \cdot cm$, and they satisfy $1.5R_1^{1/2} - 0.1R_2 - 0.25R_3 > 0$.

2. A 120 Kg grade ultra-high strength galvanized steel plate, which comprises the following chemical elements in addition to Fe and other unavoidable impurities:

   C: 0.18-0.24%,
   Mn: 2.3-3.0%,
   Si: 0.5-1.7%,
   Al: 0.02-1.0%,

$$0.55 < Si + Al \leq 1.75\%,$$

$$C + Si/30 + Mn/20 \leq 0.395\%,$$

   at least one of Nb, Ti, B, Cr, Mo and REM,
   wherein,
   the thickness of the steel plate is set to t, the resistivity $R_1$ of the steel plate is $0 < R_1 \leq 55 \mu\Omega \cdot cm$; in the direction from the interface between the plating layer and the steel plate matrix to the steel plate matrix, the resistivity $R_2$ of the steel plate in the range of 0.025 t to 0.05 t is $0 < R_2 \leq 15 \mu\Omega \cdot cm$, and the resistivity $R_3$ of the material in the range of 0.01 t to 0.015 t is $0 < R_3 \leq 35 \mu\Omega \cdot cm$, and they satisfy $1.5R_1^{1/2} - 0.1R_2 - 0.25R_3 > 0$.

3. The 120 Kg grade ultra-high strength galvanized steel plate according to claim 1 or 2, wherein the contents of Nb, Ti, B, Cr, Mo and REM are as follows:

$$0 \leq Nb \leq 0.1\%;$$

$$0 \leq Ti \leq 0.1\%;$$

$$0 \leq B \leq 0.003\%;$$

$$0 \leq Cr \leq 0.1\%;$$

0≤Mo≤0.1%;

0≤REM≤0.05%.

4. The 120 Kg grade ultra-high strength galvanized steel plate according to claim 3, wherein, if present, the contents of Nb, Ti, B, Cr, Mo and REM are as follows:

Nb: 0.08-0.1%;
Ti: 0.01-0.02%;
B: 0.0004-0.0023%;
Cr: 0.05-0.1%;
Mo: 0.02-0.1%;
REM: 0.0035-0.05%.

5. The 120 Kg grade ultra-high strength galvanized steel plate according to claim 1 or 2, wherein it comprises, by mass percentage, among other unavoidable impurities:
P≤0.015%, S≤0.010%, N≤0.010%.

6. The 120 Kg grade ultra-high strength galvanized steel plate according to claim 1 or 2, wherein when Type III specimens according to ISO 6892-1 standard are stretched at room temperature perpendicularly to the rolling direction, the steel plate has a tensile strength of ≥ 1180MPa, a yield strength of ≥800MPa, an elongation at break of ≥14%, and a hole expansion ratio of ≥ 30%.

7. The 120 Kg grade ultra-high strength galvanized steel plate according to claim 1 or 2, wherein the thickness of the steel plate is set to t, the resistivity $R_1$ of the steel plate is 41-55$\mu\Omega\cdot$cm; in the direction from the interface between the plating layer and the steel plate matrix to the steel plate matrix, the resistivity $R_2$ of the steel plate in the range of 0.025 t to 0.05 t is 11-15$\mu\Omega\cdot$cm, and the resistivity $R_3$ of the material in the range of 0.01 t to 0.015 t is 24-35$\mu\Omega\cdot$cm, and they satisfy $1.5R_1^{1/2}-0.1R_2-0.25R_3>0$.

8. The 120 Kg grade ultra-high strength galvanized steel plate according to claim 1, wherein when the welding current is ≤1.5*$I_{splash}$, Type B or Type C LME cracks will not appear, and if Type D cracks appear, the length of Type D cracks is less than 10% of the thickness of the base metal; when the welding current is < $I_{splash}$, Type B, Type C or Type D cracks will not appear, and if Type A cracks occur, the length is less than 5% of the thickness of the base metal, wherein $I_{splash}$ is the minimum current at which splashing occurs.

9. A manufacturing method for the 120 Kg grade ultra-high strength galvanized steel plate according to claims 1-8, which comprises the following steps:

(1) Smelting and continuous casting to obtain a cast billet that satisfies the composition of the steel plate according to any one of claims 1-5;
(2) Hot rolling: the cast billet obtained in step (1) is heated, subjected to final rolling, laminar flow cooling and coiling to obtain a hot-rolled coil;
(3) Pickling and cold rolling: the hot-rolled coil obtained in step (2) is pickled, cold-rolled to obtain a cold rolled coil without annealing;
(4) Continuous annealing: the cold rolled coil without annealing obtained in step (3) was subjected to a multi-stage heat treatment to obtain a strip steel;
(5) Galvanizing: the strip steel obtained in step (4) enters the zinc pot at a temperature of ($T_{ZP}\pm$15°C) for galvanizing to obtain a galvanized steel plate.

10. The manufacturing method for the 120 Kg grade ultra-high strength galvanized steel plate according to claim 9, wherein the multi-stage heat treatment comprises the following (a)~(d):

(a) First stage annealing: the cold rolled coil without annealing is heated to a first stage temperature in the range of not less than 600 °C ~ ($A_{c1}$ + 40 °C) to obtain a steel coil,
(b) Second stage annealing: the steel coil obtained in (a) is further heated to a second stage temperature in the range of ($A_{c1}$+50°C)~($A_{c3}$+80°C) or ($A_{c1}$+50°C)~900°C, and held for 30 ~ 300s to obtain a strip steel, wherein the smaller value from ($A_{c3}$+80°C) and 900°C is taken as the upper limit of the second stage temperature range,

(c) Third stage annealing: the strip steel obtained in (b) is cooled to a third stage temperature in the range of $M_s$~$M_f$ at a cooling rate that is no less than a certain cooling rate $V_{2-3}$ and held for 10~120s,

(d) Fourth stage annealing: the strip steel obtained in (c) is heated again to a fourth stage temperature in the range of 350°C~$T_{ZP}$ and held for 15~90s,

wherein $A_{c1}$ is the temperature at which the pearlite transforms into austenite when heated, $A_{c3}$ is the final temperature of transforming into austenite when heated, $M_s$ is the temperature at which martensite appears, and $M_f$ is the temperature of full martensitization, $V_{2-3}$ represents the cooling rate, which is not less than 50°C/s

11. The manufacturing method for the 120 Kg grade ultra-high strength galvanized steel plate according to claim 10, wherein

in (a), the heating temperature is 680-720°C;
in (b), the heating temperature is 830-900°C, and the soaking time is 30-145s;
in (c), the third stage temperature is 220-310°C, and the holding time is 25-110s;
in (d), the heating temperature is 355-420°C, and the holding time is 20-86s.

12. The manufacturing method for the 120 Kg grade ultra-high strength galvanized steel plate according to claim 10, wherein, in step (4), the atmosphere in (a) contains 0.01-0.5% of $O_2$ by volume, with a balance of $N_2$ and unavoidable impurities; the atmosphere in (b) contains at least 1.5% by volume of $H_2$, 0.2% or less by volume of water vapor, with a balance of $N_2$ and unavoidable impurities, and a dew point of -25~10 °C.

13. The manufacturing method for the 120 Kg grade ultra-high strength galvanized steel plate according to claim 9, wherein, in step (2),

the heating temperature is in the range of 1150~1300 °C,
the temperature of the final rolling is in the range of $A_{c3}$~1000 °C,
the holding temperature of laminar flow cooling is in the range of ($A_{c1}\pm45$°C), and the laminar flow cooling residence time is 5~30s, and then the steel is cooled to 550~650 °C and coiled, and the coiled steel coil is thermally insulated in the range of (a coiling temperature of $T_c\pm30$°C) for 30~300min.

14. The manufacturing method for the 120 Kg grade ultra-high strength galvanized steel plate according to claim 13, wherein, in step (2),

the heating temperature is in the range of 1165~1270 °C,
the temperature of the final rolling is in the range of 885~945 °C,
the holding temperature of laminar flow cooling is in the range of 680-720°C, and the laminar flow cooling residence time is 7-26s;
the coiling temperature is 550-645°C, the holding time after coiling is 45-270min.

15. The manufacturing method for the 120 Kg grade ultra-high strength galvanized steel plate according to claim 9, wherein, in step (5), when the galvanized steel plate is a hot-dip galvanized steel plate with a zinc plating layer, the steel plate with a zinc plating layer is cooled to room temperature after it is discharged from the zinc pot; when the galvanized steel plate is a hot-dip galvanized steel plate with a zinc iron alloy plating layer, the hot-dip galvanized steel plate with a zinc iron alloy plating layer is thermally insulated in the range of (zinc pot temperature $T_{ZP}$-20°C)~(zinc pot temperature $T_{ZP}$+35°C) for 5~60s for alloying after it is discharged from the zinc pot, and then cooled to room temperature; preferably, $T_{ZP}$ is 458-461°C.

Fig. 1

Fig. 2

<table>
<tr><td colspan="2">**INTERNATIONAL SEARCH REPORT**</td><td>International application No.<br>**PCT/CN2023/104382**</td></tr>
</table>

**A.    CLASSIFICATION OF SUBJECT MATTER**

C22C38/02(2006.01)i;  C22C38/04(2006.01)i;  C22C38/06(2006.01)i;  C22C38/12(2006.01)i;  C22C38/14(2006.01)i;
C22C38/38(2006.01)i;  C22C38/22(2006.01)i;  C22C38/26(2006.01)i;  C22C38/28(2006.01)i;  C22C38/32(2006.01)i;
C22C38/34(2006.01)i;  C22C33/04(2006.01)i;  C21D1/00(2006.01)i;  C23C2/06(2006.01)i

According to International Patent Classification (IPC) or to both national classification and IPC

**B.    FIELDS SEARCHED**

Minimum documentation searched (classification system followed by classification symbols)

IPC: C22C,C21D,C23C

Documentation searched other than minimum documentation to the extent that such documents are included in the fields searched

Electronic data base consulted during the international search (name of data base and, where practicable, search terms used)

CNABS, CNTXT, ENTXTC, VEN, WPABSC, WPABS, DWPI, CJFD, 超星读秀, CNKI: 宝山钢铁, 宝钢, 陈孟, 毕文珍, 钟勇, 王利, 镀锌, 钢板, LME, 液态金属脆化, 裂纹, TypeA, 点焊, 电阻焊, 焊接, 厚度, 梯度, 板厚, 电阻率, 电阻系数, 电阻值, steel, galvanized, galvanizing, galvanizion, gradient, thickness, resistivity, specific resistance, Liquid metal embrittlement

**C.    DOCUMENTS CONSIDERED TO BE RELEVANT**

| Category* | Citation of document, with indication, where appropriate, of the relevant passages | Relevant to claim No. |
|---|---|---|
| A | JP 2007146246 A (JFE STEEL K. K.) 14 June 2007 (2007-06-14)<br>description, paragraphs 9-38 | 1-15 |
| A | CN 113348258 A (NIPPON STEEL CORP.) 03 September 2021 (2021-09-03)<br>entire document | 1-15 |
| A | KR 102386730 B1 (POSCO) 14 April 2022 (2022-04-14)<br>entire document | 1-15 |
| A | KR 20200075949 A (POSCO) 29 June 2020 (2020-06-29)<br>entire document | 1-15 |
| A | WO 2019132288 A1 (POSCO) 04 July 2019 (2019-07-04)<br>entire document | 1-15 |

☐ Further documents are listed in the continuation of Box C.        ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **07 October 2023** | **20 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/104382**

| Patent document cited in search report | | | Publication date (day/month/year) | Patent family member(s) | | | Publication date (day/month/year) |
|---|---|---|---|---|---|---|---|
| JP | 2007146246 | A | 14 June 2007 | JP | 5131802 | B2 | 30 January 2013 |
| CN | 113348258 | A | 03 September 2021 | EP | 3967779 | A1 | 16 March 2022 |
| | | | | WO | 2020225936 | A1 | 12 November 2020 |
| | | | | MX | 2021012807 | A | 12 November 2021 |
| | | | | US | 2022177994 | A1 | 09 June 2022 |
| | | | | JP | 6750759 | B1 | 02 September 2020 |
| | | | | KR | 20210114042 | A | 17 September 2021 |
| | | | | JP | WO2020225936 | A1 | 03 June 2021 |
| | | | | IN | 202117045413 | A | 21 January 2022 |
| KR | 102386730 | B1 | 14 April 2022 | None | | | |
| KR | 20200075949 | A | 29 June 2020 | KR | 102153194 | B1 | 08 September 2020 |
| WO | 2019132288 | A1 | 04 July 2019 | KR | 20190078437 | A | 04 July 2019 |
| | | | | KR | 102065230 | B1 | 10 January 2020 |

Form PCT/ISA/210 (patent family annex) (July 2022)

**REFERENCES CITED IN THE DESCRIPTION**

**Patent documents cited in the description**

• US 11299793 B2